# EUROPÄISCHE PATENTANMELDUNG

(11) **EP 3 822 841 A1**
(43) Veröffentlichungstag der Anmeldung: **19.05.2021**
(21) Anmeldenummer: 19208641.1
(22) Anmeldetag: 12.11.2019
(51) Int. Cl.: G06F 40/247, G06N 3/02

(54) **COMPUTERIMPLEMENTIERTES VERFAHREN ZUM TRAINIEREN EINES MODELLS, VERFAHREN ZUR BEARBEITUNG EINES DATENSTROMS MIT DIESEM MODELL SOWIE VORRICHTUNGEN DAFÜR**

(71) Anmelder: Robert Bosch GmbH, 70442 Stuttgart (DE)
(72) Erfinder: Stroetgen, Jannik, 76135 Karlsruhe (DE); Oberle, Juergen, 71065 Sindelfingen (DE); Hildebrand, Felix Eberhard, 70176 Stuttgart-West (DE)

(57) **Zusammenfassung**

Computerimplementiertes Verfahren und Vorrichtung zum Trainieren eines Modells, insbesondere eines künstlichen neuronalen Netzwerks, und Verfahren und Vorrichtung zum Bearbeiten eines Datenstroms mit diesem, wobei
- in einer ersten Phase (202) Trainingsdaten erzeugt werden, wobei die Trainingsdaten Schlüsselworte umfassen, wobei substituierbare Schlüsselworte einander in den Trainingsdaten zugeordnet sind, wobei
- in einer zweiten Phase (204) das Modell für eine Klassifizierung abhängig von den Trainingsdaten trainiert wird, wobei aus den Trainingsdaten wenigstens zwei Schlüsselworte für einen Eingang des Modells bereitgestellt werden (204-a) und durch das Modell entweder in eine Klasse einander zugeordneter Schlüsselworte oder in eine Klasse einander nicht zugeordneter Schlüsselworte klassifiziert werden (204-b), und wobei wenigstens ein Parameter des Modells abhängig von einem Ergebnis der Klassifizierung und abhängig von Information über einander in den Trainingsdaten zugeordneten und/oder über einander in den Trainingsdaten nicht zugeordneten Schlüsselworte bestimmt wird (204-c).

## Beschreibung

### Stand der Technik

Die Erfindung geht aus von einem computerimplementierten Verfahren zum Trainieren eines Modells sowie einem Verfahren zur Bearbeitung eines Datenstroms mit diesem Modell. Die Erfindung betrifft auch Vorrichtungen zur Durchführung dieser Verfahren.

Auf dem Gebiet der Datenverarbeitung ist es von besonderer Bedeutung umfassende Datenmengen möglichst effizient zu verarbeiten. Für Experten in einer Domäne, d.h. in einem Spezialgebiet wie den Materialwissenschaften, ist es beispielsweise wünschenswert möglichst effizient und frühzeitig große Datenmengen dahingehend zu sichten, ob darin Materialien beschrieben sind, die durch andere ebenfalls darin beschriebene Materialien ersetzbar sind, oder ob darin Verfahren beschrieben sind, die durch andere darin beschriebene Verfahren ersetzbar sind. Substituierbare Materialien oder Verfahren sind für den menschlichen Experten an Schlüsselwörtern die diese identifizieren und aufgrund der im Text beschriebenen Beziehung der Schlüsselwörter zueinander erkennbar, insbesondere auch durch die Kombination mit dem Hintergrundwissen des Experten.

Methoden zur maschinellen Verarbeitung natürlicher Sprache, d.h. Verfahren für Natural Language Processing, sind in der Lage, automatisiert für Menschen lesbaren Text zu verarbeiten und beispielsweise Wissen daraus zu extrahieren und strukturiert verfügbar zu machen.

### Offenbarung der Erfindung

Demgegenüber wird eine hinsichtlich der Rechenressourcen, des Speicherbedarfs und der Zeit verbesserte Datenverarbeitung angegeben, die sich insbesondere für große Datenmengen in Form von diachronen Dokumentensammlungen eignet, in denen Information zu substituierbaren Materialen oder Verfahren aus einer Domäne enthalten sind. Die Methode ermöglicht dabei das besonders frühzeitige Erkennen solcher Substitutionen. Eine diachrone Dokumentensammlung umfasst Dokumente aus einem längeren Zeitraum.

Ein computerimplementiertes Verfahren zum Trainieren eines Modells, insbesondere eines künstlichen neuronalen Netzwerks, sieht vor, dass in einer ersten Phase Trainingsdaten erzeugt werden, wobei die Trainingsdaten Schlüsselworte umfassen, wobei substituierbare Schlüsselworte einander in den Trainingsdaten zugeordnet sind, wobei in einer zweiten Phase das Modell für eine Klassifizierung abhängig von den Trainingsdaten trainiert wird, wobei aus den Trainingsdaten wenigstens zwei der Schlüsselworte für einen Eingang des Modells bereitgestellt werden und durch das Modell entweder in eine Klasse einander zugeordneter Schlüsselworte oder in eine Klasse einander nicht zugeordneter Schlüsselworte klassifiziert werden, und wobei wenigstens ein Parameter des Modells abhängig von einem Ergebnis der Klassifizierung und abhängig von Information über einander in den Trainingsdaten zugeordneten und/oder über einander in den Trainingsdaten nicht zugeordneten Schlüsselworten bestimmt wird. Die Schlüsselworte definieren beispielsweise Materialien oder Verfahren aus einer bestimmten Domäne. Die Schlüsselworte können von Experten vorgegeben sein oder automatisiert gelernt werden. Ein Training des Modells mit den Trainingsdaten ermöglicht es, das Modell für eine Klassifikation von Daten zur Erkennung möglicherweise substituierbarer Materialien oder Verfahren zu trainieren.

Vorzugsweise wird eine Funktion oder ein Embedding für ein Schlüsselwort bestimmt, das aus einer diachronen Sammlung von Texten extrahiert wird, die Domänenwissen enthält, wobei Schlüsselworte Materialien oder Verfahren aus der Domäne charakterisieren, wobei die Texte der diachronen Sammlung von Texten Informationen über substituierbare Materialien oder substituierbare Verfahren umfasst. Ein substituierendes Material oder ein substituierender Prozess soll beispielsweise aufgrund sich ändernder normativer Regelungen, z.B. hinsichtlich der Verwendung von Blei, aufgrund Ressourcenknappheit, z.B. hinsichtlich der Verwendung von Cobalt, aufgrund von gewünschter Kosten- oder Gewichtsreduktion aufgefunden werden. Literatur oder Schutzreche wie Patentschriften enthalten oft verborgene Hinweise auf substituierende Materialien oder Verfahren. Das Auffinden dieser wird durch semantisch angereicherte Information automatisch möglich.

Bevorzugt wird für wenigstens eines der Schlüsselworte abhängig von einem Ergebnis einer Belohnungs-basierten Analyse des Texts eine Funktion oder ein Embedding für das Schlüsselwort bestimmt, die einen Verlauf einer Belohnung für das Schlüsselwort insbesondere über der Zeit definiert. Diese Analyse basiert beispielsweise auf einer Frequenz in der ein Schlüsselwort in Texten eines Zeitintervalls auftaucht. Es kann auch ein Term Frequence - Inverse Document Frequence Ansatz verwendet werden, um eine Wichtigkeit eines Schlüsselworts für den Text festzustellen. Bei diesem wird zunächst die Frequenz bestimmt, mit der ein Term in Texten eines Zeitintervalls auftritt, und dann mit dem inversen Quotienten aus der Anzahl der Dokumente, die den Term enthalten, und der Gesamtanzahl der Dokumente multipliziert. Alternativ kann zwischen domänenspezifischen und domänenunspezifischen Texten unterschieden werden: Für Texte, die als spezifisch für eine Domäne bekannt sind, ist beispielsweise ein Term, der mit einer hohen Frequenz auftritt, möglicherweise ein Schlüsselwort. Für Texte, die als unspezifisch für eine Domäne bekannt sind, ist ein Term der mit niedriger Frequenz auftritt möglicherweise ein Schlüsselwort für eine Domäne. Term bezeichnet hierbei beispielsweise ein Substantiv das aus einem Text extrahiert wird. In der Analyse wird folgende Kombination ausgewertet: Ein Term ist dann ein Schlüsselwort einer Domäne, wenn er häufig in Texten der Domäne, aber nicht häufig in Texten unspezifisch für eine Domäne auftritt. Denn es gibt auch Wörter die in domänenspezifischen und domänenunspezifischen Texten häufig sind (z.B. "the") - und welche, die in beiden selten sind. Durch diese Kombination werden genau die Terme gefunden, die in domänenspezifischen Texten häufig und in domänenunspezifischen selten sind.

Vorzugsweise wird für eine Vielzahl Schlüsselworte eine Vielzahl der Funktionen bestimmt, wobei Kandidaten für einander in den Trainingsdaten zugeordnete Schlüsselworte abhängig von den Funktionen bestimmt werden. Durch die Betrachtung der zeitlichen Verläufe beispielsweise in einem Datenstrom der den Text charakterisiert, wird eine frühzeitige Erkennung von Kandidaten möglich. Frühzeitige Erkennung von Substituten bedeutet in diesem Zusammenhang, dass ein potentielles Substitut durch das Verfahren lange vor der tatsächlichen umfänglichen Substitution erkannt wird und möglichst auch vor der Identifikation als mögliches Substitut durch Domänenexperten. Beispielsweise gibt es zwei Materialen A und B, wobei A in 20 Jahren B in allen Anwendungen ersetzt haben wird. Heute gibt es bislang noch keine oder fast keine Anzeichen dafür, dass dies möglich ist. Durch die Erkennung wird aus den allerersten Anzeichen dafür, dass B ein Substitut für A ist eine Vorhersage getroffen, dass B ein mögliches Substitut für A ist.

Vorzugsweise werden zwei Schlüsselworte als Kandidaten für einander in den Trainingsdaten zugeordnete Funktionen bestimmt, wenn die beiden Funktionen sich insbesondere in ihrem zeitlichen Verlauf schneiden. Dies ist eine mit besonders geringem Aufwand an Zeit, Rechenressourcen und Speicherbedarf realisierbare Analyse.

Bevorzugt werden einander in den Trainingsdaten zugeordnete Schlüsselworte abhängig von modelliertem Domänenwissen aus den Kandidaten ausgewählt, wobei das modellierte Domänenwissen ein Maß für einen Grad der Zuordnung wenigstens zweier Schlüsselworte zueinander definiert, und wobei Funktionen als einander zugeordnete Schlüsselworte bestimmt werden, für die das Maß ein Entscheidungskriterium erfüllt. Das Entscheidungskriterium kann eine Taxonomie-basierte Ähnlichkeit einer Repräsentation der Schlüsselworte im Vergleich zu einem Schwellwert, eine Analyse von Repräsentationen der Schlüsselworte, die aus unterschiedlichen Dokumenten gelernt wurden, oder eine Verknüpfung dieser sein. Dadurch ein Substitut noch frühzeitiger erkennbar.

Vorzugsweise werden die Funktionen in ihrem insbesondere zeitlichen Verlauf innerhalb eines insbesondere gleitenden Fensters ausgewertet. Der Zeitpunkt der Analyse ist damit wählbar, so dass die Erkennung von substituierenden Materialien und Verfahren möglichst frühzeitig erfolgen kann. Dies ermöglicht es, die Erkennung an die Gegebenheiten anzupassen, um so ein Substitut noch frühzeitiger zu erkennen.

Ein Verfahren zur Bearbeitung eines Datenstroms sieht vor, dass Daten aus dem Datenstrom extrahiert werden, die Schlüsselworte charakterisieren, wobei gemäß dem beschriebenen Verfahren für die Schlüsselworte einander in den Trainingsdaten zugeordnete Schlüsselworte bestimmt werden und ein Modell abhängig von diesen Trainingsdaten trainiert wird, und wobei im Datenstrom abhängig vom so trainierten Modell Zuordnungen von Daten identifiziert und/oder ausgegeben werden, die substituierbare Schlüsselworte charakterisieren. Damit wird der Datenstrom mit besonders geringem Aufwand nach Anzeichen für mögliche Substitute durchsucht und ein Substitut besonders frühzeitig erkennbar.

Eine entsprechende Vorrichtung zur Klassifizierung sieht vor, dass die Vorrichtung eine Recheneinrichtung und einen Speicher für ein Modell umfasst, wobei die Vorrichtung ausgebildet ist, das Verfahren zum Trainieren des Modells auszuführen.

Eine entsprechende Vorrichtung zur Bearbeitung eines Datenstroms, sieht vor, dass die Vorrichtung eine Recheneinrichtung, einen Speicher für ein Modell und einen Eingang und einen Ausgang für den Datenstrom umfasst, wobei die Vorrichtung ausgebildet ist, das Verfahren zur Bearbeitung des Datenstroms auszuführen.

Weitere vorteilhafte Ausführungsformen ergeben sich aus der folgenden Beschreibung und der Zeichnung. In der Zeichnung zeigt:
- Fig. 1: eine schematische Darstellung einer Vorrichtung zur Klassifizierung,
- Fig. 2: Schritte in einem Verfahren zum Trainieren eines Modells für Klassifizierung,
- Fig. 3: eine schematische Darstellung einer Vorrichtung zum Verarbeiten eines Datenstroms,
- Fig. 4: Schritte in einem Verfahren zum Verarbeiten des Datenstroms.

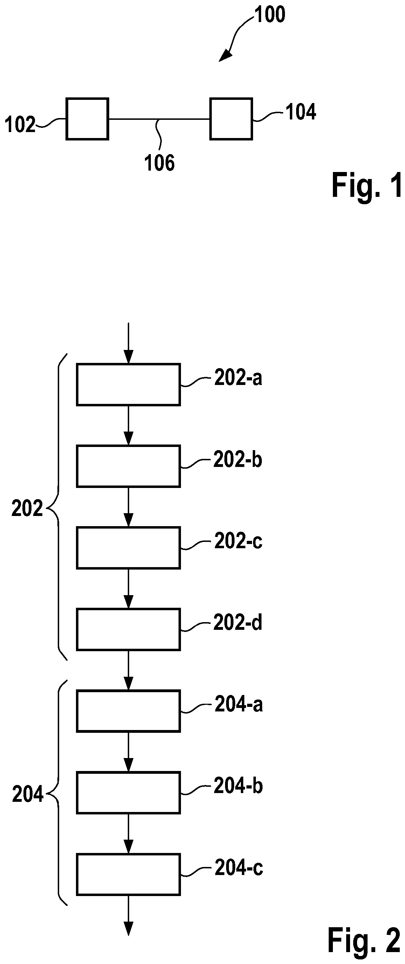

Figur 1 stellt eine Vorrichtung 100 zur Klassifizierung mit einem Modell schematisch dar. Die Vorrichtung 100 umfasst eine Recheneinrichtung 102 und einen Speicher 104 für das Modell. Diese sind über eine Datenleitung 106 verbunden. Die Recheneinrichtung 102 kann auch als verteiltes Rechensystem mit jeweiligem Speicher ausgebildet sein. Die Vorrichtung 100 ist ausgebildet, das folgende anhand der Figur 2 beschriebene computerimplementierte Verfahren auszuführen.

Das Modell ist beispielsweise ein künstliches neuronales Netzwerk.

Das computerimplementierte Verfahren umfasst in einer ersten Phase, die in Figur 2 mit dem Bezugszeichen 202 bezeichnet ist, Schritte, mit denen Trainingsdaten erzeugt werden.

Das Verfahren basiert auf Texten aus einer diachronen Dokumentensammlung, d.h. einer Dokumentensammlung, die Dokumente aus einem bestimmten Zeitraum umfasst.

In einem Schritt 202-a werden aus einem Text Schlüsselworte extrahiert. Der Text enthält Domänenwissen. Die Schlüsselworte charakterisieren Materialien oder Verfahren aus der Domäne. Die diachrone Sammlung an Texten umfasst zudem latente, das heißt für einen Menschen nicht direkt beobachtbare Information über substituierbare Materialien oder substituierbare Verfahren. Die Texte stammen beispielsweise aus Literatur oder aus Patenten aus der Domäne.

In einem anschließenden Schritt 202-b werden die Funktionen für die Schlüsselworte bestimmt. Für ein bestimmtes Schlüsselwort wird beispielsweise abhängig von einem Ergebnis einer Belohnungs-basierten Analyse des Texts eine Funktion für das Schlüsselwort bestimmt, die einen Verlauf einer Belohnung für das Schlüsselwort insbesondere über der Zeit definiert.

Für zwei verschiedene mit den Indizes i und j gekennzeichnete Schlüsselworte wird beispielsweise je eine separate Funktion, d.h. eine Funktion xi(t) und eine Funktion xj(t) bestimmt.

Allgemein wird für eine Vielzahl Schlüsselworte eine Vielzahl der Funktionen bestimmt.

Anschließend werden in einem Schritt 202-c Kandidaten für einander in den Trainingsdaten zugeordnete Schlüsselworte abhängig von den Funktionen bestimmt.

Zwei Schlüsselworte werden beispielsweise als Kandidaten für einander in den Trainingsdaten zugeordnete Funktionen bestimmt, wenn die beiden Funktionen sich insbesondere in ihrem zeitlichen Verlauf schneiden.

Für die beiden Funktionen xi(t) und xj(t) wird beispielsweise festgestellt, dass zu einem ersten Zeitpunkt t1 xi(t1) < xj(t1), das für eine Ableitung xi'(t) der Funktion xi(t) die Ableitung xi'(t) > 0 ist und für eine Ableitung xj'(t) der Funktion xj(t) die Ableitung xj'(t) < 0 ist, und dass zu einem zweiten Zeitpunkt t2>t1 xi(t2) > xj(t2) ist. In diesem Fall sind die beiden Funktionen xi(t) und xj(t) Kandidaten.

In einem anschließenden Schritt 202-d werden einander in den Trainingsdaten zugeordnete Funktionen abhängig von modelliertem Domänenwissen aus den Kandidaten ausgewählt.

Im Beispiel definiert das modellierte Domänenwissen ein Maß für einen Grad der Zuordnung wenigstens zweier Funktionen zueinander.

Funktionen werden im Beispiel als einander zugeordnete Funktionen bestimmt, für die das Maß ein Entscheidungskriterium erfüllt.

Das Entscheidungskriterium kann eine Taxonomie-basierte Ähnlichkeit einer Repräsentation der Schlüsselworte im Vergleich zu einem Schwellwert, eine Analyse von Repräsentationen (Embeddings) der Schlüsselworte, die aus unterschiedlichen Dokumenten gelernt wurden, oder eine Verknüpfung dieser sein.

Um die semantische, taxonomische Ähnlichkeit von i und j feststellen zu können, werden i und j in die Taxonomie eingebunden, d.h. in einer entsprechende Knowledge Base verknüpft. Beispielsweise werden die Schlüsselwörter i und j durch Natural Language Processing eingebunden oder verknüpft. Beispielsweise werden die Schlüsselwörter i und j mittels "concept linking" eingebunden oder verknüpft. Durch das concept linking wird beispielweise ein Knowledge Graph erzeugt, der diese Informationen umfasst.

Ein score_tax(i, j) ist ein Ähnlichkeitswert und gibt an, wie nahe die zwei Schlüsselwörter i und j in der Taxonomie sind. Damit wird eine Ähnlichkeit zwischen den Schlüsselwörtern, beispielsweise für Materialien oder Prozesse und nicht zwischen den Funktionen xi und xj über die Schlüsselwörter berechnet. Das heißt, wenn der semantische, taxonomische Abstand zwischen i und j klein ist, sind i und j sehr "ähnlich" und bekommen somit einen großen Score zugewiesen. Ein Schlüsselwort ist beispielsweise durch eine Entität im Knowledge Graph definiert. Der score_tax wird beispielsweise als Abstand von Entitäten für die Schlüsselwörter im Knowledge-Graph bestimmt.

Zur Bewertung der Ähnlichkeitswerte wird eine untere Schranke Φ_tax definiert, so dass i und j als noch semantisch, taxonomisch "ähnlich" bezeichnet werden können.

Mit der Knowledge Base wird nun eine Taxonomie-basierte Ähnlichkeit der Schlüsselwörter i und j ermittelt und mit der unteren Schranke φ_tax verglichen. Wenn score_tax(i, j) > φ_tax ist das Entscheidungskriterium in diesem Beispiel erfüllt. Ein Beispiel zur Berechnung von score_tax(i,j) ist eine Berechnung der Anzahl der übereinstimmenden "Eltern", "Großeltern" etc. in der Taxonomie.

Eine andere Möglichkeit zur Bestimmung der Ähnlichkeit von i und j ist über die Analyse von Repräsentationen, d.h. den Embeddings von i und j, die mit Hilfe von Neuronalen Netzwerken auf Dokumenten der Zeitintervalle ta=[t0,t1] und tb=[t2,t3] gelernt werden, also den Embeddings für i in ta I=i_ta und j in tb J=j_tb. Dazu werden die Embeddings emb(l) und emb(J) jeweils über verschiedene sub-Corpora, bestimmt, um die ähnliche Verwendung der Terme zu verschiedenen Zeitintervallen ta und tb sicherzustellen. Sub-Corpora werden abhängig von den Texten aus der diachronen Dokumentensammlung aus dem jeweiligen Zeitintervall bestimmt. Wenn beispielsweise mehrere Dokumente im Zeitraum t0 bis t1 (ta) und direkt darauffolgend t2 bis t3 (tb) aus einer Domäne verfügbar sind, wird im Beispiel das erste Embedding emb(l) abhängig vom Inhalt von allen Dokumenten aus dem Zeitraum t0 bis t1 gelernt und das zweite Embedding emb(J) abhängig vom Inhalt von Dokumenten aus dem Zeitraum t2 bis t3. Durch die Art der Auswahl der Texte für ein Training aus verschiedenen Zeitintervallen ta, tb, werden keine Standard-Wort-Embeddings gelernt. Die Embeddings für dasselbe Wort können damit abhängig vom jeweiligen Zeitintervall unterschiedlich sein, aus dem die Texte stammen, mit dem die Embeddings trainiert wurden. Das Embedding emb(I=i_ta) ist eine Wort Repräsentationen gelernt von Texten aus einem Zeitintervall ta. Das Embedding emb(J=j_tb) ist eine Wort Repräsentationen gelernt von Texten aus einem Zeitintervall tb.

Es wird nun ein Grenzwert φ_emb für die Ähnlichkeit der Embeddings definiert. Der Grenzwert φ_emb stellt sicher, dass wenn score_emb(emb(I), emb(J)) > φ_emb, die Embeddings von I und J und damit der Kandidaten i und j als "ähnlich" erkannt werden. Der score_emb(emb(I),emb(J)) ist dabei ein Maß für den Abstand der Embeddings im gewählten Raum. Ein Embedding ist beispielsweise durch einen Wortvektor definiert. Der score_emb wird beispielsweise als Abstand der Wortvektoren für die Embeddings bestimmt.

Wenn für verschiedene Schlüsselwörter, d.h. für i#j, sowohl score_tax(i, j) > Φ_tax als auch score_emb(emb(I), emb(J)) > φ_emb festgestellt wird, werden die Schlüsselwörter i und j als Kandidaten für Substitute in den Trainingsdaten gelabelt. Anderenfalls werden die Schlüsselwörter i und j als Nicht-Kandidaten für Substitute in den Trainingsdaten gelabelt. Hier sind auch andere Kombinationen der Kriterien denkbar.

Ein Ausgang der Auswertung des Entscheidungskriteriums ist im Beispiel die Zuordnung zweier Zeit-Serien für das Funktionspaar xi, xj.

Die Zuordnung der Funktionen erfolgt vorzugsweise paarweise. Es kann auch eine Mehrzahl der Funktionen, die jeweils paarweise einander in den Trainingsdaten zugeordnete Funktionen darstellen, zusammengefasst werden.

Die Funktionen können in ihrem zeitlichen Verlauf innerhalb eines gleitenden Fensters ausgewertet werden. Der Verlauf muss nicht zeitlich sein, es kann auch ein Index den Verlauf angeben.

Die Trainingsdaten umfassen Funktionen für Schlüsselworte. In den Trainingsdaten sind die Funktionen von substituierbaren Schlüsselworten einander zugeordnet.

Das computerimplementierte Verfahren umfasst in einer zweiten Phase, die in Figur 2 mit dem Bezugszeichen 204 bezeichnet ist, Schritte, mit denen das Modell für eine Klassifizierung abhängig von den Trainingsdaten trainiert wird.

In einem anschließenden Schritt 204-a werden aus den Trainingsdaten wenigstens zwei der Funktionen für einen Eingang des Modells bereitgestellt.

In einem anschließenden Schritt 204-b werden die wenigstens zwei Funktionen durch das Modell entweder in eine Klasse einander zugeordneter Funktionen oder in eine Klasse einander nicht zugeordneter Funktionen klassifiziert.

In einem Schritt 204-c wird wenigstens ein Parameter des Modells abhängig von einem Ergebnis der Klassifizierung und abhängig von Information über einander in den Trainingsdaten zugeordneten und/oder über einander in den Trainingsdaten nicht zugeordneten Funktionen bestimmt.

In einem Batch eines Trainingslaufs werden die Schritt 204-a bis 204-c beispielsweise für eine Vielzahl der Funktionen durchlaufen bis das Modell ein Gütekriterium erfüllt.

Im Beispiel wird ein Klassifizierer M(xi, xj) trainiert. M kann ein beliebiger Klassifikator oder Klassifizierer sein, z.B. eine Support Vector Machine.

Der Klassifizierer M(xi, xj) wird beispielsweise mit den Funktionspaaren xi, xj trainiert, die einander in den Trainingsdaten zugeordnet sind, um zu unterscheiden, wie ein Muster aussieht, wenn es eine Zuordnung gibt, die sich substituierende Schlüsselworte kennzeichnet. Diese wird beispielsweise durch einen Wert 1 am Ausgang des Klassifizierers M(xi, xj) angezeigt. Sofern keine Zuordnung erkannt wird, zeigt dies im Beispiel ein Wert 0 am Ausgang des Klassifizierers M(xi, xj) an.

Es kann ein gleitendes Fenster für die Zeit-Serien verwendet werden, die die zu klassifizierenden Funktionen repräsentieren. In diesem Fall ist es möglich, frühzeitig für alle sich ändernden Zeit-Serien für alle Paare von Kandidaten festzustellen, ob am Ausgang des Klassifizierers M(xi, xj) der Wert 0 oder der Wert 1 ausgegeben wird. Das bedeutet, die Kandidaten werden frühzeitig entweder als tatsächlich für die Trainingsdaten einander zugeordnete Funktionen (1) erkannt oder nicht (0).

Zur Anwendung des Modells werden Dokumente für die Anwendung eines Klassifizierers vorbereitet. Ausgangspunkt sind Texte aus einer diachronen Dokumentensammlung, die möglicherweise versteckte Information zu substituierenden Materialien oder Verfahren enthalten. Dazu zählt Literatur oder Patentschriften aus einer zu untersuchenden Domäne.
Für diese werden die Schlüsselworte extrahiert, die sich auf die substituierenden Materialien oder Verfahren beziehen und die Belohnungs-basierte Analyse durchgeführt. Ausgehend vom Ergebnis dieser Analyse werden die substituierenden Schlüsselworte frühzeitig identifiziert und ausgegeben. Dazu wird der Klassifizierer M(xi,xj) beispielsweise auf alle möglichen Funktionspaare xi, xj angewendet. Die Ausgabe des Klassifizierers M(xi,xj) wird abhängig von einer auf dem Klassifizierer M(xi,xj) basierenden Wahrscheinlichkeit als F(xi,xj, M) mit Werten 0 oder 1 ausgegeben. Beispielsweise wird abhängig von einem Schwellwert eps für die Wahrscheinlichkeit überprüft, ob M(xi,xj)>eps. Ist dies der Fall, ist F(xi, xj, M)=1 mit Wahrscheinlichkeit M. Dadurch wird frühzeitig festgelegt, dass es sich bei dem betrachteten Funktionspaar um einander zugeordnete Funktionen handelt.

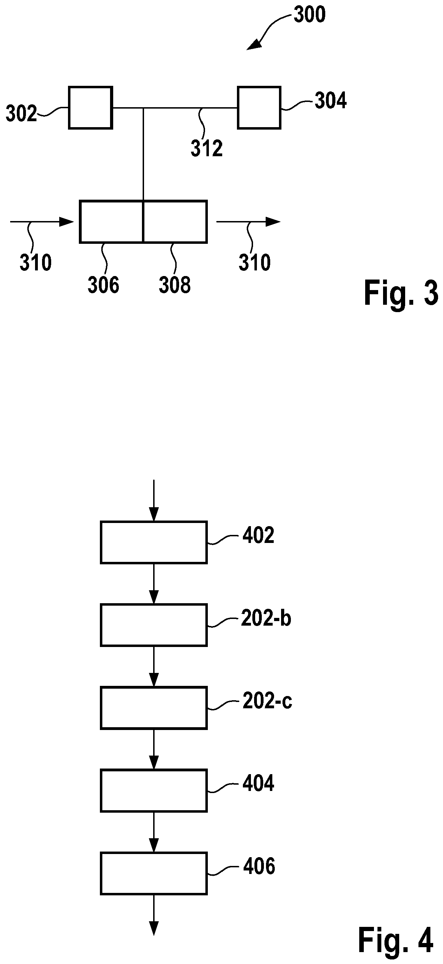

Eine Vorrichtung 300 in der ein derartiges Modell einsetzbar ist, wird im Folgenden anhand der Figur 3 beschrieben. Die Vorrichtung 300 umfasst eine Recheneinrichtung 302, einen Speicher 304 für ein Modell und einen Eingang 306 und einen Ausgang 308 für einen Datenstrom 310. Diese sind über eine Datenleitung 312 verbunden. Die Recheneinrichtung 302 kann auch als verteiltes Rechensystem mit jeweiligem Speicher ausgebildet sein. Die Vorrichtung 300 ist ausgebildet, das im Folgenden anhand der Figur 4 beschriebene Verfahren auszuführen.

Der Begriff Datenstrom bezeichnet in diesem Zusammenhang einen maschinenlesbaren Strom von Daten. Der Datenstrom kann Text oder Texte mit einer Vielzahl Worte darstellen.

Das Verfahren zur Bearbeitung des Datenstroms 310 sieht vor, dass in einem Schritt 402 Daten aus dem Datenstrom 310 extrahiert werden, die Schlüsselworte charakterisieren.

Anschließend werden, wie für den Schritt 202-b beschrieben, die Schlüsselworte bestimmt.

Anschließend werden, wie für den Schritt 202-c beschrieben, einander in den Trainingsdaten zugeordnete Schlüsselworte bestimmt.

In einem anschließenden Schritt 404 wird ein Modell abhängig von diesen Trainingsdaten trainiert.

Anschließend werden in einem Schritt 406 im Datenstrom abhängig vom so trainierten Modell Zuordnungen von Daten identifiziert und/oder ausgegeben, die substituierbare Schlüsselworte charakterisieren.

Anschließend endet das Verfahren.

## Patentansprüche

1. Computerimplementiertes Verfahren zum Trainieren eines Modells, insbesondere eines künstlichen neuronalen Netzwerks, **dadurch gekennzeichnet, dass**
- in einer ersten Phase (202) Trainingsdaten erzeugt werden, wobei die Trainingsdaten Schlüsselworte umfassen, wobei substituierbare Schlüsselworte einander in den Trainingsdaten zugeordnet sind, wobei
- in einer zweiten Phase (204) das Modell für eine Klassifizierung abhängig von den Trainingsdaten trainiert wird, wobei aus den Trainingsdaten wenigstens zwei der Schlüsselworte für einen Eingang des Modells bereitgestellt werden (204-a) und durch das Modell entweder in eine Klasse einander zugeordneter Schlüsselworte oder in eine Klasse einander nicht zugeordneter Schlüsselworte klassifiziert werden (204-b), und wobei wenigstens ein Parameter des Modells abhängig von einem Ergebnis der Klassifizierung und abhängig von Information über einander in den Trainingsdaten zugeordneten und/oder über einander in den Trainingsdaten nicht zugeordneten Schlüsselworte bestimmt wird (204-c).

2. Verfahren nach Anspruch 1, **dadurch gekennzeichnet, dass** eine Funktion oder ein Embedding für ein Schlüsselwort bestimmt wird (202-b), das aus einer diachronen Sammlung von Texten extrahiert wird (202-a), die Domänenwissen enthält, wobei Schlüsselworte Materialien oder Verfahren aus der Domäne charakterisieren, wobei die Texte der diachronen Sammlung von Texten Informationen über substituierbare Materialien oder substituierbare Verfahren umfasst.

3. Verfahren nach Anspruch 2, **dadurch gekennzeichnet, dass** für wenigstens eines der Schlüsselworte abhängig von einem Ergebnis einer Belohnungs-basierten Analyse des Texts eine Funktion oder ein Embedding für das Schlüsselwort bestimmt wird (202-b), die einen Verlauf einer Belohnung für das Schlüsselwort definiert.

4. Verfahren nach Anspruch 3, **dadurch gekennzeichnet, dass** für eine Vielzahl Schlüsselworte eine Vielzahl der Funktionen bestimmt wird (202-b), wobei Kandidaten für einander in den Trainingsdaten zugeordnete Schlüsselworte abhängig von den Funktionen bestimmt werden (202-c).

5. Verfahren nach Anspruch 4, **dadurch gekennzeichnet, dass** zwei Schlüsselworte als Kandidaten für einander in den Trainingsdaten zugeordnete Funktionen bestimmt werden (202-c), wenn die beiden Funktionen sich insbesondere in ihrem zeitlichen Verlauf schneiden.

6. Verfahren nach einem der Ansprüche 3 bis 5, wobei einander in den Trainingsdaten zugeordnete Schlüsselworte abhängig von modelliertem Domänenwissen aus den Kandidaten ausgewählt werden (202-d), wobei das modellierte Domänenwissen ein Maß für einen Grad der Zuordnung wenigstens zweier Schlüsselworte zueinander definiert, und wobei Schlüsselworte als einander zugeordnete Schlüsselworte bestimmt werden, für die das Maß ein Entscheidungskriterium erfüllt.

7. Verfahren nach Anspruch 6, **dadurch gekennzeichnet, dass** die Funktionen in ihrem insbesondere zeitlichen Verlauf innerhalb eines insbesondere gleitenden Fensters ausgewertet werden (202-d).

8. Verfahren zur Bearbeitung eines Datenstroms, **dadurch gekennzeichnet, dass** Daten aus dem Datenstrom extrahiert werden (402), die Schlüsselworte charakterisieren, wobei gemäß dem Verfahren nach einem der Ansprüche 1 bis 7 für die Schlüsselworte einander in den Trainingsdaten zugeordnete Schlüsselworte bestimmt werden (202-b, 202-c) und ein Modell abhängig von diesen Trainingsdaten trainiert wird (404), und wobei im Datenstrom abhängig vom so trainierten Modell Zuordnungen von Daten identifiziert und/oder ausgegeben werden (406), die substituierbare Schlüsselworte charakterisieren.

9. Vorrichtung (100) zur Klassifizierung, **dadurch gekennzeichnet, dass** die Vorrichtung einen Recheneinrichtung (102) und einen Speicher (104) für ein Modell umfasst, wobei die Vorrichtung (100) ausgebildet ist, das Verfahren nach einem der Ansprüche 1 bis 7 auszuführen.

10. Vorrichtung (300) zur Bearbeitung eines Datenstroms (310), **dadurch gekennzeichnet, dass** die Vorrichtung (300) eine Recheneinrichtung (302), einen Speicher (304) für ein Modell und einen Eingang (306) und einen Ausgang (308) für den Datenstrom (310) umfasst, wobei die Vorrichtung (300) ausgebildet ist, das Verfahren nach Anspruch 8 auszuführen.

11. Computerprogramm, **dadurch gekennzeichnet, dass** das Computerprogramm computerlesbare Instruktionen umfasst, bei deren Ausführen auf einem Computer ein Verfahren nach einem der Ansprüche 1 bis 8 abläuft.

12. Computerprogrammprodukt, **gekennzeichnet durch** ein maschinenlesbares Speichermedium, auf dem das Computerprogramm nach Anspruch 11 gespeichert ist.
